(19) Europäisches Patentamt
European Patent Office
Office européen des brevets

(11) **EP 3 248 852 B1**

(12) **EUROPÄISCHE PATENTSCHRIFT**

(45) Veröffentlichungstag und Bekanntmachung des Hinweises auf die Patenterteilung:
**24.10.2018   Patentblatt 2018/43**

(51) Int Cl.:
*B60W 40/04* (2006.01)      *B60W 40/114* (2012.01)
*B60W 40/103* (2012.01)    *B60W 40/109* (2012.01)
*B60W 40/107* (2012.01)    *B60W 40/105* (2012.01)
*G01S 5/02* (2010.01)       *G01S 17/93* (2006.01)
*G01S 17/87* (2006.01)     *G01S 17/58* (2006.01)
*G01S 17/42* (2006.01)     *G01S 17/66* (2006.01)
*G01S 7/48* (2006.01)       *G06F 17/30* (2006.01)
*G01S 17/06* (2006.01)     *G06K 9/00* (2006.01)
*G06K 9/32* (2006.01)       *B60W 50/00* (2006.01)

(21) Anmeldenummer: **17172191.3**

(22) Anmeldetag: **22.05.2017**

(54) **VERFAHREN ZUM BETREIBEN EINER VERARBEITUNGSEINRICHTUNG FÜR SENSORDATEN EINES IN EINEM KRAFTFAHRZEUG ANGEORDNETEN SENSORS UND KRAFTFAHRZEUG**

METHOD FOR OPERATING A PROCESSING DEVICE FOR SENSOR DATA OF A SENSOR INSTALLED IN A MOTOR VEHICLE AND MOTOR VEHICLE

PROCÉDÉ DE FONCTIONNEMENT D'UN DISPOSITIF DE TRAITEMENT POUR DES DONNÉES DE CAPTEUR D'UN CAPTEUR DISPOSÉ DANS UN VÉHICULE AUTOMOBILE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2016   DE 102016006381**

(43) Veröffentlichungstag der Anmeldung:
**29.11.2017   Patentblatt 2017/48**

(73) Patentinhaber: **AUDI AG**
**85045 Ingolstadt (DE)**

(72) Erfinder:
• **Wingert, Daniel**
**85057 Ingolstadt (DE)**
• **Schmid, Matthias Roland**
**85098 Großmehring (DE)**
• **Borsdorf, Rüdiger**
**38102 Braunschweig (DE)**

• **Bauer, Michael**
**09126 Chemnitz (DE)**

(56) Entgegenhaltungen:
**US-A1- 2009 040 095**

• **SCHUTZ MARKUS ET AL: "Simultaneous tracking and shape estimation with laser scanners", PROCEEDINGS OF THE 16TH INTERNATIONAL CONFERENCE ON INFORMATION FUSION, ISIF ( INTL SOCIETY OF INFORMATION FUSI, 9. Juli 2013 (2013-07-09), Seiten 885-891, XP032512327, ISBN: 978-605-86311-1-3 [gefunden am 2013-10-18]**
• **ANNA PETROVSKAYA ET AL: "Model based vehicle detection and tracking for autonomous urban driving", AUTONOMOUS ROBOTS, KLUWER ACADEMIC PUBLISHERS, BO, Bd. 26, Nr. 2-3, 1. April 2009 (2009-04-01), Seiten 123-139, XP019670023, ISSN: 1573-7527**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 248 852 B1

**Beschreibung**

Die Erfindung betrifft ein Verfahren zum Betreiben einer Verarbeitungseinrichtung für Sensordaten wenigstens eines in einem Kraftfahrzeug verbauten Sensors, welcher Gegenstände in der Umgebung des Kraftfahrzeugs erfasst und dessen Sensordaten Gegenstandspunkte mit einer Abstandsinformation beschreiben, wobei die Verarbeitungseinrichtung aus den Sensordaten Objekte ermittelt und die Bewegung eines als Fahrzeug klassifizierten Objekts verfolgt, wobei die Verfolgung des Objekts mittels eines Dynamikmodells erfolgt, welches eine die Bewegung des Objekts in zwei Koordinatenrichtungen beschreibende Bewegungsinformation verwendet.

Bei der Erzeugung von Umgebungsmodellen eines Kraftfahrzeugs kommen vermehrt Sensoren zum Einsatz, die Gegenstände in der Umgebung des Kraftfahrzeugs nicht lediglich zweidimensional abbilden, wie beispielsweise Kameras, sondern erfassten Gegenstandspunkten zusätzlich eine Abstands- bzw. Tiefeninformation zuordnen. Es ist bekannt, vom Sensor bereitgestellte Sensordaten durch eine Verarbeitungseinrichtung weiterzuverarbeiten, wobei durch Merkmalsextraktion aus den Gegenstandspunkten (logische) Objekte ermittelt werden. Zur weiteren Nutzung dieser Daten, beispielsweise für Fahrerassistenzsysteme, ist es zudem erforderlich, dass eine Verfolgung der Bewegung dieser Objekte (sog. "Tracking") über mehrere Messzyklen des Sensors erfolgt. Dazu ist es bekannt, ein Dynamikmodell einzusetzen, bei dem die Bewegung des Objekts in zwei Koordinatenrichtungen beschrieben wird, beispielsweise durch einen Zustandsvektor, der eine x-Komponente und eine y-Komponente der Bewegungsgeschwindigkeit aufweist.

Nachteilig ist dabei jedoch, dass ein solches Dynamikmodell keine Informationen über die Ausrichtung, also den Gierwinkel, des durch das Objekt repräsentierten (realen) Fahrzeugs aufweist. Sofern die gewonnenen Informationen über das Objekt lediglich für Fahrerassistenzsysteme verwendet werden sollen, bei denen nur Verkehr in Längs- oder Querrichtung betrachtet wird, lässt sich unter der Zusatzannahme, dass der Verkehr nur in einer der vorgenannten Richtungen auftritt, die Ausrichtung eines Fahrzeugs bestimmen. Bei komplexeren Fahrerassistenzsystem, beispielsweise solchen, die den Fahrer an Straßenkreuzungen unterstützen sollen, lassen sich solche Zusatzannahmen jedoch nicht eindeutig treffen, so dass Scheinbewegungen des Objekts auftreten können oder die Verfolgung des Objekts gar abreißt. Der Artikel "Simultaneous Tracking and Shape Estimation with Laser Scanners" (erschienen in Intelligent Vehicles Symposium Proceedings 2014 IEEE, pp. 1205-1210, 2014) offenbart den Oberbegriff des Anspruchs 1. Der Erfindung liegt mithin die Aufgabe zugrunde, ein demgegenüber zuverlässigeres Verfahren der eingangs genannten Art anzugeben, welches insbesondere in Verkehrssituationen mit Längs- und Querverkehr eine robuste Verfolgung von Objekten ermöglicht.

Diese Aufgabe wird durch ein Verfahren der eingangs genannten Art gelöst, bei dem erfindungsgemäß vorgesehen ist, dass die Verarbeitungseinrichtung bei Erfüllung eines auf die Bewegungsinformation und/oder auf eine die geometrische Ausdehnung des Objekts beschreibende Geometrieinformation angewendeten Zuweisungskriteriums im Rahmen des Dynamikmodells zusätzlich eine Orientierungsinformation verwendet, welche eine Bounding Box mit einer den Gierwinkel des Fahrzeugs beschreibenden Orientierung umfasst.

Die Erfindung beruht auf der Überlegung, das herkömmlicherweise eingesetzte Dynamikmodell, welches eine die Bewegung des Objekts in zwei Koordinatenrichtungen beschreibenden Bewegungsinformation verwendet, um die Orientierungsinformation zu ergänzen, sobald die Bewegungsinformation und/oder die Geometrieinformation eine hinreichend genaue Aussage über die tatsächliche Ausrichtung des durch das Objekt repräsentierten Fahrzeugs zulässt. Erst dann wird die Bounding Box, also eine insbesondere rechteckige Einhüllende, die das gesamte Objekt begrenzt, ermittelt und mit der auf den Gierwinkel des Fahrzeugs bezogenen Orientierung versehen. Mit anderen Worten lässt die Orientierungsinformation eine Aussage darüber zu, welche Längs- bzw. Querseite des repräsentierten Fahrzeugs welcher Seite der Bounding Box entspricht.

Das erfindungsgemäße Verfahren realisiert den Vorteil, dass Orientierungsmehrdeutigkeiten, die typischerweise vier denkbare Ausrichtungen des Fahrzeugs innerhalb der Bounding Box umfassen, aufgelöst werden können. So kann beispielsweise dem Problem begegnet werden, dass der Sensor in einem Messzyklus die Front- und die Fahrerseite und in einem folgenden Messzyklus die Front- und die Beifahrerseite des Fahrzeugs erfasst, woraus eine unerwünschte Scheinbewegung des Objekts bei der Verfolgung abgeleitet wird. Durch das erfindungsgemäße Verfahren werden mithin zuverlässigere Informationen über die Bewegung des Objekts bereitgestellt, die insbesondere für Fahrerassistenzsysteme in Form von sog. Kreuzungsassistenten verwendet werden können.

Dazu werden die Gegenstände in der Umgebung des Kraftfahrzeugs zunächst durch den Sensor, der insbesondere durch die Verwendung von Laufzeitverfahren die auch als Tiefeninformation aufzufassende Abstandsinformation ermittelt, erfasst. Die Verarbeitungseinrichtung ermittelt dann aus den Sensordaten Objekte, klassifiziert diese beispielsweise durch aus dem Stand der Technik bekannte Klassifikationsalgorithmen als Fahrzeuge und führt die Verfolgung bzw. das "Tracking" dieser Objekte durch. Das dazu eingesetzte Dynamikmodell beschreibt die Bewegung des Fahrzeugs dabei bis zur Erfüllung des Zuweisungskriteriums nur durch die Bewegungsinformation, also in zwei Koordinatenrichtungen. Zweckmäßigerweise wird dazu ein euklidisches Koordinatensystem verwendet, dessen x-Koordinatenrichtung typischerweise der Querachse des Kraftfahrzeugs und dessen y-Koordinatenrichtung der Längsachse des Kraftfahrzeugs entspricht. Die Verfolgung des Objekts erfolgt somit bis zur Erfüllung des Zuweisungskriteriums unabhängig von der Orientierung des Objekts. Mit anderen Worten werden die typischerweise vier möglichen Ausrichtungen des durch das Objekt repräsentierten Fahrzeugs gleichwertig behandelt.

Das erfindungsgemäße Verfahren zeichnet sich nun dadurch aus, dass die Verarbeitungseinrichtung das Zuweisungskriterium auswertet, welches gemäß einer ersten Erfindungsalternative auf die Bewegungsinformation angewendet wird. In diesem Fall wird, bevorzugt auf Basis von Sensordaten mehrerer Messzyklen des Sensors, überprüft, ob sich eine mögliche Ausrichtung des Fahrzeugs, also dessen Gierwinkel, mit der ermittelten Bewegungsrichtung des Objekts assoziieren lässt. Bevorzugt beschreibt die Bewegungsinformation die in zwei Komponenten, insbesondere in x-Richtung und y-Richtung, zerlegte Geschwindigkeit des Objekts. Dementsprechend wird der Gierwinkel des Fahrzeugs zweckmäßigerweise als Winkelversatz der Fahrzeuglängsachse oder der Fahrzeugquerachse zu einer Koordinatenrichtung definiert. Gemäß einer zweiten Erfindungsalternative, die jedoch auch kombiniert mit der zuvor beschriebenen verwendet werden kann, wird im Rahmen des Zuweisungskriteriums überprüft, ob die geometrische Ausdehnung des Objekts, also insbesondere die geometrische Anordnung der Gegenstandspunkte, einen hinreichend genauen Rückschluss auf die Ausrichtung des Fahrzeugs zulässt.

Bei beiden Erfindungsalternativen wird bei Erfüllung des Zuweisungskriteriums die Bounding Box für das Objekt erzeugt und dieser eine der Ausrichtung des Fahrzeugs entsprechende Orientierung zugewiesen. Es wird quasi auf ein erweitertes Dynamikmodell umgeschaltet, das neben der herkömmlichen Bewegungsinformation zusätzlich die Orientierungsinformation verwendet und daher eine eindeutige Auflösung von Orientierungsmehrdeutigkeiten während der Verfolgung ermöglicht.

Es ist besonders vorteilhaft, wenn der Bounding Box von mehreren möglichen Orientierungen jene zugewiesen wird, für die die Abweichung ihres Orientierungswinkels von der Bewegungsrichtung des Objekts minimal ist. Es können mithin mehrere Orientierungswinkel $\varphi$ der Bounding Box betrachtet werden, wobei jener Orientierungswinkel zugewiesen wird, der die geringste Abweichung zu der aus der Bewegungsinformation ermittelten Bewegungsrichtung aufweist. Umfasst die Bewegungsinformation dabei die Geschwindigkeit des Objekts in x- und y-Richtung, so wird jener Orientierungswinkel $\varphi$ zugewiesen, für den

$$\left| \mathrm{atan2}\left(v_y, v_x\right) - \varphi \right|$$

minimal ist, wobei $v_x$ und $v_y$ die Geschwindigkeiten des Objekts in y- bzw. x-Richtung beschreiben und atan2 einen zwei Argumente aufweisenden Arcustangens-Operator beschreibt.

Es wird zudem im Rahmen des erfindungsgemäßen Verfahrens bevorzugt, wenn das auf die Bewegungsinformation angewendete Zuweisungskriterium ein Erreichen eines Schwellwerts durch ein Maß einer Winkelunsicherheit der Bewegungsrichtung des Objekts beschreibt. Das Maß der Winkelunsicherheit beschreibt die Genauigkeit der Schätzung der Bewegungsrichtung des Objekts durch die Verarbeitungseinrichtung. Der Schwellwert wird dabei zweckmäßigerweise so gewählt, dass eine für die vorgesehene Verwendung des Verfahrens ausreichende Sicherheit der Bewegungsrichtung angenommen werden kann. Da für die Verfolgung von Objekten verwendete Tracking-Algorithmen wie z. B. Kalman-Filter ohnehin ein solches Maß oder zumindest Parameter, aus denen sich das Maß einfach ableiten lässt, berechnen, kann eine besonders einfache Auswertung des Zuweisungskriteriums erfolgen.

Es ist von besonderem Vorteil, wenn das Maß für die Winkelunsicherheit in Abhängigkeit der Varianz wenigstens einer Geschwindigkeit in einer Koordinatenrichtung und/oder der Kovarianz von Geschwindigkeiten in den Koordinatenrichtungen ermittelt wird. Die Varianz und die Kovarianz sind dabei Parameter, die bei der Verwendung des Tracking-Algorithmus anfallen können, da sie der statistischen Ermittlung der Bewegungsrichtung des verfolgten Objekts dienen. Formelmäßig kann ein derart ermitteltes Maß für die Winkelunsicherheit wie folgt dargestellt werden:

$$\frac{\sqrt{\mathrm{Var}(v_x) \cdot v_y^2 - 2 \cdot \mathrm{Covar}(v_x, v_y) \cdot v_x \cdot v_y + \mathrm{Var}(v_y) \cdot v_x^2}}{v_x^2 + v_y^2}$$

Dabei beschreiben die Operatoren Var die Varianz und Covar die Kovarianz.

Bei dem erfindungsgemäßen Verfahren ist es besonders zweckmäßig, wenn die Verarbeitungseinrichtung zur Bestimmung des Objekts mehrere Gegenstandspunkte zu einem durch eine Strecke oder mehrere Strecken begrenzten Segment zusammenfasst und einen Referenzpunkt ermittelt. Die dazu werden verwendeten Segmentierungsverfahren sind an sich aus dem Stand der Technik bekannt und ermitteln aus einer Menge von Gegenstandspunkten das zusammenhängende Segment. Ist dem Sensor dabei lediglich eine Seite des Gegenstands zugewandt, erfasst der Sensor im Wesentlichen auf einer Linie liegende Gegenstandspunkte, die zu dem eine Strecke aufweisenden Segment (I-shape) zusammengefasst werden. Wenn dem Sensor dagegen wenigstens zwei Seiten des Gegenstands zugewandt sind, wird eine Menge von Gegenstandspunkten erfasst, die einen eckenartigen Verlauf aufweist. Daraus kann dann das zwei Strecken aufweisende Segment (L-shape) gebildet werden. Die Begrenzung eines Segments ist dabei Grundlage für die Definition der (vollständigen) Bounding Box, so dass das Segment auch als partielle Bounding Box aufgefasst werden kann.

Der Referenzpunkt bildet dabei den Anknüpfungspunkt für die Bestimmung der Position des Objekts, wobei dieser zweckmäßigerweise als Endpunkt der Strecke oder als Schnittpunkt von zwei Strecken des Segments ermittelt wird. Die Verfolgung der Bewegung des Objekts kann dann vorteilhafterweise anhand des Referenzpunkts erfolgen. Es ist zudem besonders zweckmäßig, wenn der Referenzpunkt eine Eckposition des Fahrzeugs beschreibt. Dies ermöglicht eine besonders einfache Assoziierung des zu ermittelnden Objekts mit dem erfassten Fahrzeug.

Das auf die Geometrieinformation angewendete Zuweisungskriterium kann das Erreichen eines Schwellwerts für ein Verhältnis von zwei Streckenlängen beschreiben. Bevorzugt werden dazu die durch den Referenzpunkt begrenzten Strecken verwendet. Auf Basis der Hypothese, dass die Front und das Heck eines Fahrzeugs wesentlich kürzer als dessen Längsseiten sind, kann so ein besonders einfacher Rückschluss auf die Ausrichtung des Fahrzeugs gezogen und die Orientierungsinformation auch in Abhängigkeit dieses Verhältnisses bestimmt werden.

Bei dem erfindungsgemäßen Verfahren wird es darüber hinaus bevorzugt, wenn die Größe der Bounding Box in Abhängigkeit der Orientierungsinformation und einer Geometriehypothese für das Fahrzeug angepasst wird. Bei oder nach der Ermittlung der Bounding Box und der Feststellung der Orientierung des Fahrzeugs kann so anhand der Geometriehypothese, die beispielsweise besagt, dass die Längsseite eines Fahrzeugs um einen vorgegebenen Faktor größer als die Querseite ist, eine Korrektur der Größe der Bounding Box erfolgen. Dies ist besonders zweckmäßig, wenn das auf die Bewegungsinformation angewendete Zuweisungskriterium verwendet wird, da eine zunächst ermittelte Größe der Bounding Box aufgrund nur fragmentarisch erfasster Gegenstandspunkte von der tatsächlichen Größe des erfassten Fahrzeugs abweichen kann. Ist jedoch die Orientierung des Objekts bekannt, kann die Länge der Längsseite des Fahrzeugs einfach auf Basis einer ermittelten Länge der Querseite bestimmt werden und umgekehrt.

Wie bereits angedeutet, können die Ausgangsdaten der Verarbeitungseinrichtung als Eingangsdaten für ein Fahrerassistenzsystem dienen. Es wird daher bevorzugt, wenn die Verarbeitungseinrichtung aus der Verfolgung gewonnene Objektinformationen für ein Bewegungen von Fahrzeugen in Quer- und Längsrichtung auswertendes Fahrzeugsystem bereitstellt. Das Fahrzeugsystem kann insbesondere ein Fahrerassistenzsystem sein, dass Verkehrssituationen an einer Straßenkreuzung (sog. Kreuzungsassistent) auswertet. Dabei können die Objektdaten dem Fahrzeugsystem unmittelbar zugeführt werden oder zunächst mit Ausgangsdaten anderer Sensoreinrichtung des Kraftfahrzeugs zu einem Umgebungsmodell fusioniert und dann dem Fahrzeugsystem bereitgestellt werden.

Schließlich wird es bei dem erfindungsgemäßen Verfahren besonders bevorzugt, wenn als Sensor ein Laserscanner und/oder eine Time-of-Flight-Kamera und/oder ein Radarsensor verwendet wird. Diese Sensortypen basieren allesamt auf der Auswertung der Laufzeit von ausgesendeten elektromagnetischen Wellen und eignen sich daher hervorragend für die Erfassung der tiefenaufgelösten Gegenstandspunkte.

Daneben betrifft die Erfindung ein Kraftfahrzeug, umfassend einen in ihm verbauten Sensor zum Erfassen von Gegenständen in der Umgebung des Kraftfahrzeugs und zum Bereitstellen von Sensordaten, die eine Abstandsinformation aufweisende Gegenstandspunkte beschreiben, sowie eine Verarbeitungseinrichtung für die Sensordaten, welche gemäß dem erfindungsgemäßen Verfahren betrieben wird. Sämtliche Ausführungen zum erfindungsgemäßen Verfahren lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:

Fig. 1     eine Prinzipskizze eines erfindungsgemäßen Kraftfahrzeugs in einer exemplarischen Verkehrssituation;
Fig. 2     eine Darstellung mehrerer möglicher Orientierungen einer Bounding Box;
Fig. 3     eine Darstellung der Ermittlung der tatsächlichen Orientierung der Bounding Box; und
Fig. 4     eine Darstellung der Anpassung der Größe der Bounding Box.

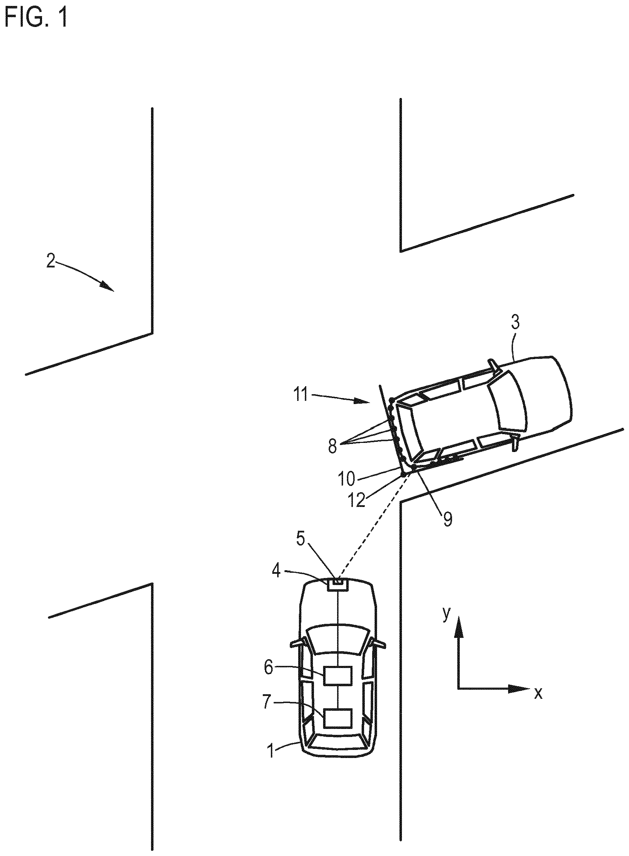

Fig. 1 zeigt eine Prinzipskizze eines Kraftfahrzeugs 1 in einer exemplarischen Verkehrssituation. Es befindet sich an einer Straßenkreuzung 2, die gerade von einem querenden Fahrzeug 3 passiert wird.

Das Kraftfahrzeug 1 weist eine Sensoreinrichtung 4 mit mehreren Sensoren auf, wobei aus Gründen der Übersichtlichkeit lediglich ein im Frontbereich des Kraftfahrzeugs angeordneter Sensor 5 gezeigt ist. Der Sensor 5 ist dazu ausgebildet Gegenstände in der Umgebung des Kraftfahrzeugs zu erfassen, wobei dessen Sensordaten Gegenstandspunkte mit einer Abstandsinformation beschreiben. Der Sensor 5 kann dementsprechend beispielsweise als Laserscanner, Time-of-Flight-Kamera oder als Radarsensor ausgebildet sein. Die weiteren Sensoren der Sensoreinrichtung 4 können an weiteren Einbaupositionen des Kraftfahrzeugs 1 angeordnet und/oder durch unterschiedliche der vorgenannten Sensortypen realisiert sein.

Die Sensordaten werden einer Verarbeitungseinrichtung 6 bereitgestellt. Diese erzeugt Objektinformationen, welche Gegenstände in der Umgebung des Kraftfahrzeugs 1, beispielsweise das Fahrzeug 3, beschreibende Objekte repräsentieren. Die Objektinformationen werden von einem Fahrzeugsystem 7 in Form eines Bewegungen von Fahrzeugen im Umfeld des Kraftfahrzeugs 1 auswertenden Fahrerassistenzsystems, beispielsweise eines sog. Kreuzungsassistenten, ausgewertet. Die Verarbeitungseinrichtung 6 ist gemäß eines im Folgenden anhand der Verkehrssituation näher beschriebenen Verfahrens betreibbar:

Wie aus Fig. 1 ersichtlich erfasst der Sensor 5 das Fahrzeug 3 im Bereich dessen Hecks und dessen Beifahrerseite, wobei Gegenstandspunkte 8 beschreibende Sensordaten erzeugt werden. Diese werden der Verarbeitungseinrichtung 6 bereitgestellt, welche die Gegenstandspunkte 8 mittels eines Segmentierungsalgorithmus zu einem durch zwei Strecken 9, 10 begrenzten Segment 11 (L-Shape) zusammenfasst, welches auch als partielle Bounding Box aufgefasst werden kann. Zudem ermittelt die Verarbeitungseinrichtung 6 den Schnittpunkt der Strecken 9, 10 als Referenzpunkt 12 für die weitere Verfolgung der Bewegung eines das Fahrzeug 3 repräsentierenden Objekts. Dabei führt die Verarbeitungseinrichtung 6 auch einen entsprechenden Klassifikationsalgorithmus durch, der das zunächst nur als Gegenstand erfasste Fahrzeug 3 als solches klassifiziert.

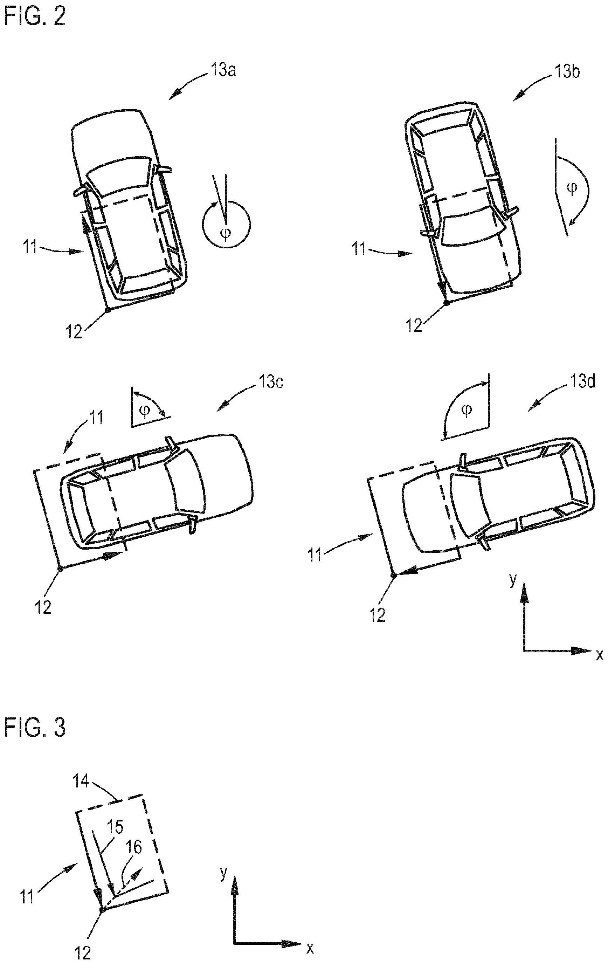

Die Verarbeitungseinrichtung 6 verfolgt das Objekt über weitere Meßzyklen des Sensors 5 unter Einsatz eines Dynamikmodells, welches eine die Bewegung des Objekts in zwei Koordinatenrichtungen x, y beschreibende Bewegungsinformation verwendet. Die Verfolgung erfolgt mithin unabhängig von der tatsächlichen Ausrichtung des Fahrzeugs 3, also seines auf eine der Koordinatenrichtungen x, y bezogenen Gierwinkels. Mit anderen Worten werden vier mögliche, in Fig. 2 gezeigte Ausrichtungen 13a-13d des Fahrzeugs 3 als gleichwertig behandelt. Über die gesamte Dauer der Bewegung des Kraftfahrzeugs 3 wäre dies jedoch nachteilhaft, da eine eventuelle Fehldetektion einer anderen Eckposition des Fahrzeugs 3 als Referenzpunkt 12 in einem späteren Meßzyklus eine Scheinbewegung des Objekts ergeben würde oder gar zu einem Abriss der Verfolgung führen könnte.

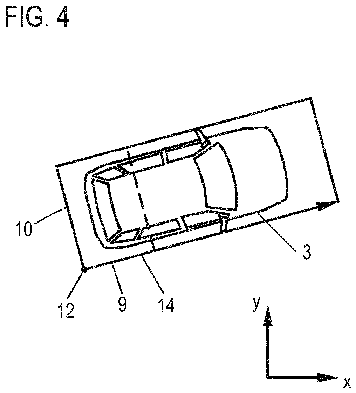

Um dieser Problematik zu begegnen, wird bei Erfüllung eines Zuweisungskriteriums im Rahmen des Dynamikmodells zusätzlich eine Orientierungsinformation verwendet, welche eine (vollständige) Bounding Box 14 (vgl. Fig. 4) mit einer den Gierwinkel des Fahrzeugs 3 beschreibenden Orientierung umfasst. Dabei wird der Bounding Box 14 von mehreren möglichen - den Ausrichtungen 13a bis 13d entsprechenden - Orientierungen jene zugewiesen, für die die Abweichung ihres Orientierungswinkels $\varphi$ von der Bewegungsrichtung des Objekts minimal ist. Dazu beschreibt die Bewegungsinformation die Geschwindigkeit des Objekts durch Geschwindigkeitskomponenten in x-Richtung und y-Richtung, so dass jener Orientierungswinkel $\varphi$ zugewiesen wird, für den

$$\left| \operatorname{atan2}\left(v_y, v_x\right) - \varphi \right|$$

minimal ist, wobei $v_x$ und $v_y$ die Geschwindigkeiten des Objekts in y- bzw. x-Richtung beschreiben und atan2 einen zwei Argumente aufweisenden Arkustangens-Operator beschreibt.

Diese Zuweisung, mit anderen Worten ein Umschalten des Dynamikmodells, erfolgt jedoch erst bei Erfüllung eines Zuweisungskriteriums, d.h. sobald die Orientierung mit hinreichender Sicherheit bestimmbar ist. Dazu wird das Zuweisungskriterium auf die Bewegungsinformation angewendet und beschreibt das Erreichen eines Schwellwerts durch ein Maß einer Winkelunsicherheit der Bewegungsrichtung des Objekts. Dieses Maß ermittelt die Verarbeitungseinrichtung 6 gemäß folgender Formel:

$$\frac{\sqrt{\operatorname{Var}(v_x) \cdot v_y^2 - 2 \cdot \operatorname{Covar}(v_x, v_y) \cdot v_x \cdot v_y + \operatorname{Var}(v_y) \cdot v_x^2}}{v_x^2 + v_y^2}$$

Dabei beschreiben die Operatoren Var die Varianz und Covar die Kovarianz. Die entsprechenden Werte für die Varianzen und die Kovarianz werden durch die Verwendung eines Kalmann-Filters im Rahmen der Verfolgung des Objekts berechnet.

Fig. 3 zeigt die Ermittlung der tatsächlichen Orientierung der Bounding Box 14 nochmals, indem sie den Versatz des Segments 11 zu einer Position 15 bei einem späteren Meßzyklus des Sensors 5 darstellt. Der Pfeil 16 verdeutlicht dabei die Bewegungsrichtung des Objekts in Form eines Geschwindigkeitsvektors, der bei der Durchführung des das Kalman-Filter verwendenden Verfolgungsalgorithmus ermittelt wird. Ersichtlich weist der Pfeil 16 nicht entlang der Längsachse des Fahrzeugs 3. Dieser Versatz verdeutlicht, dass der Geschwindigkeitsvektor durch den Verfolgungsalgorithmus nicht exakt bestimmt werden kann, sondern eine gewisse Winkelunsicherheit gegeben ist. Erst wenn deren Maß im Rahmen des Zuweisungskriteriums als klein genug bewertet wird, erfolgt die zusätzliche Verwendung der Orientierungsinformation im Rahmen des Dynamikmodells.

Aus Fig. 4 ist außerdem ersichtlich, dass die sich durch Ergänzung der Strecken 9, 10 des Segments 11 zu einem Rechteck theoretisch ergebende Größe der Bounding Box 14 keine korrekte Einhüllende des Fahrzeugs 3 darstellt. Es erfolgt dementsprechend zusätzlich eine Anpassung ihrer Größe, mit der die Bounding Box 14 dann weiter verwendet wird. Die Anpassung der Größe erfolgt in Abhängigkeit der Orientierungsinformation und einer Geometriehypothese für das Fahrzeug 3, welche ein anzunehmendes Verhältnis der Länge der Querseite eines Fahrzeugs zur Länge seiner Längsseite beschreibt. Nachdem aufgrund der Orientierungsinformation also bekannt ist, dass der Referenzpunkt 12 die beifahrerseitige Eckposition am Heck des Fahrzeugs 3 beschreibt, werden die Seitenlängen der Bounding Box 14 gemäß der Länge der Strecke 10 und einem durch die Geometriehypothese beschriebenen Vielfachen der Länge der Strecke 10 als angepasste Länge der Strecke 9 bestimmt.

Das zuvor beschriebene Verfahren ist grundsätzlich auch verwendbar, wenn aus den Sensordaten ein nur eine Strecke aufweisendes Segment 11 (I-Shape) ermittelt wird, also wenn der Sensor 5 lediglich Gegenstandspunkte 8 einer Quer- oder Längsseite des Fahrzeugs 3 erfasst. Auch in diesem Fall kann ein entsprechender Referenzpunkt 12 als Endpunkt der Strecke ermittelt werden, wonach in Abhängigkeit der Bewegungsinformation eine Ermittlung einer Bounding Box 14 mit Zuweisung der Orientierung und eine Anpassung der Größe der Bounding Box 14 erfolgen.

Gemäß einem weiteren Ausführungsbeispiel des Verfahrens, das auch mit dem zuvor beschriebenen Ausgangsbeispiel kombiniert werden kann, wird das Zuweisungskriterium auf eine die geometrische Ausdehnung des Objekts beschreibende Geometrieinformation angewendet. Dies ist insbesondere dann zweckmäßig, wenn nach einem oder typischerweise mehreren Messzyklen des Sensors 5 die Seitenlängen des Fahrzeugs 3 hinreichend genau bestimmbar sind, so dass sich - abermals unter Anwendung einer Geometriehypothese für das Verhältnis dieser Seitenlängen - eine Aussage über die Ausrichtung des Fahrzeugs 3 ableiten lässt. Die Zuweisung des Orientierungswinkels $\varphi$ erfolgt dann analog zu dem zuvor beschriebenen Ausführungsbeispiel unter Berücksichtigung der Bewegungsinformation.

## Patentansprüche

1. Verfahren zum Betreiben einer Verarbeitungseinrichtung (6) für Sensordaten wenigstens eines in einem Kraftfahrzeug (1) verbauten Sensors (5), welcher Gegenstände in der Umgebung des Kraftfahrzeugs (1) erfasst und dessen Sensordaten Gegenstandspunkte (8) mit einer Abstandsinformation beschreiben, wobei die Verarbeitungseinrichtung (6) aus den Sensordaten Objekte ermittelt und die Bewegung eines als Fahrzeug (3) klassifizierten Objekts verfolgt, wobei die Verfolgung des Objekts mittels eines Dynamikmodells erfolgt, welches eine die Bewegung des Objekts in zwei Koordinatenrichtungen beschreibende Bewegungsinformation verwendet,
**dadurch gekennzeichnet,**
**dass** die Verarbeitungseinrichtung bei Erfüllung eines auf die Bewegungsinformation und/oder auf eine die geometrische Ausdehnung des Objekts beschreibende Geometrieinformation angewendeten Zuweisungskriteriums im Rahmen des Dynamikmodells zusätzlich eine Orientierungsinformation verwendet, welche eine Bounding Box (14) mit einer den Gierwinkel des Fahrzeugs (3) beschreibenden Orientierung umfasst.

2. Verfahren nach Anspruch 1,
**dadurch gekennzeichnet,**
**dass** der Bounding Box (14) von mehreren möglichen Orientierungen jene zugewiesen wird, für die die Abweichung ihres Orientierungswinkels ($\alpha$) von der Bewegungsrichtung des Objekts minimal ist.

3. Verfahren nach Anspruch 1 oder 2,
**dadurch gekennzeichnet,**
**dass** das auf die Bewegungsinformation angewendete Zuweisungskriterium ein Erreichen eines Schwellwerts durch ein Maß einer Winkelunsicherheit der Bewegungsrichtung des Objekts beschreibt.

4. Verfahren nach Anspruch 3,
**dadurch gekennzeichnet,**
**dass** das Maß für die Winkelunsicherheit in Abhängigkeit der Varianz wenigstens einer Geschwindigkeit in einer Koordinatenrichtung und/oder der Kovarianz von Geschwindigkeiten in den Koordinatenrichtungen ermittelt wird.

5. Verfahren nach einem der vorhergehenden Ansprüche,
**dadurch gekennzeichnet,**
**dass** die Verarbeitungseinrichtung (6) zur Bestimmung des Objekts mehrere Gegenstandspunkte (8) zu einem durch eine Strecke oder mehrere Strecken (9, 10) begrenzten Segment (11) zusammenfasst und einen Referenzpunkt (12), insbesondere als Endpunkt der Strecke oder als Schnittpunkt von zwei Strecken (9, 10) des Segments (11), ermittelt.

6. Verfahren nach Anspruch 5,
   **dadurch gekennzeichnet,**
   **dass** das auf die Geometrieinformation angewendete Zuweisungskriterium das Erreichen eines Schwellwerts für ein Verhältnis von zwei Streckenlängen beschreibt.

7. Verfahren nach Anspruch 5 oder 6,
   **dadurch gekennzeichnet,**
   **dass** die Verfolgung der Bewegung des Objekts anhand des Referenzpunkts (12) erfolgt.

8. Verfahren nach einem der Ansprüche 5 bis 7,
   **dadurch gekennzeichnet,**
   **dass** der Referenzpunkt eine Eckposition des Fahrzeugs (3) beschreibt.

9. Verfahren nach einem der vorhergehenden Ansprüche,
   **dadurch gekennzeichnet,**
   **dass** die Größe der Bounding Box (14) in Abhängigkeit der Orientierungsinformation und einer Geometriehypothese für das Fahrzeug (3) angepasst wird.

10. Verfahren nach einem der vorhergehenden Ansprüche,
    **dadurch gekennzeichnet,**
    **dass** die Verarbeitungseinrichtung (6) aus der Verfolgung gewonnene Objektinformationen für ein Bewegungen von Fahrzeugen (3) in Quer- und Längsrichtung auswertendes Fahrzeugsystem (7) bereitstellt.

11. Verfahren nach einem der vorhergehenden Ansprüche,
    **dadurch gekennzeichnet,**
    **dass** als Sensor (5) ein Laserscanner und/oder eine Time-of-Flight-Kamera und/oder ein Radarsensor verwendet wird.

12. Kraftfahrzeug, umfassend einen in ihm verbauten Sensor (5) zum Erfassen von Gegenständen in der Umgebung des Kraftfahrzeugs (1) und zum Bereitstellen von Sensordaten, die eine Abstandsinformation aufweisende Gegenstandspunkte (8) beschreiben, sowie eine Verarbeitungseinrichtung (6) für die Sensordaten, welche zur Durchführung eines Verfahrens gemäß der Ansprüche 1 - 11 ausgebildet ist.

**Claims**

1. Method for operating a processing device (6) for sensor data of at least one sensor (5) installed in a motor vehicle (1), said sensor detecting objects in the environment of the motor vehicle (1) and whose sensor data depicts object points (8) with distance information, wherein the processing device (6) determines objects from the sensor data and tracks the movement of an object classified as a vehicle (3), wherein the tracking of the object takes place by means of a dynamic model which uses movement information depicting the movement of the object in two coordinate directions,
   **characterised in that**
   as part of the dynamic model, the processing device also uses orientation information in the case of the fulfilment of an allocation criterion applied to the movement information and/or to geometry information depicting the geometric extension of the object which comprises a bounding box (14) with an orientation depicting the yaw angle of the vehicle (3).

2. Method according to claim 1,
   **characterised in that**
   from a plurality of possible orientations, the bounding box (14) is allocated the orientation for which the deviation of its orientation angle ($\alpha$) from the movement direction of the object is minimal.

3. Method according to claim 1 or 2,
   **characterised in that**

the allocation criterion applied to the movement information depicts when a threshold value has been reached by a measure of an angular uncertainty of the movement direction of the object.

**4.** Method according to claim 3,
**characterised in that**
the measure for the angular uncertainty is determined as a function of the variance of at least one speed in a coordinate direction and/or the covariance of speeds in the coordinate directions.

**5.** Method according to any one of the preceding claims,
**characterised in that**
in order to determine the object, the processing device (6) combines a plurality of object points (8) into one segment (11) delimited by a path or a plurality of paths (9, 10) and a reference point (12), in particular as an end point of the path or as an intersecting point of two paths (9, 10) of the segment (11).

**6.** Method according to claim 5,
**characterised in that**
the allocation criterion applied to the geometric information depicts when a threshold value for a ratio of two path lengths has been reached.

**7.** Method according to claim 5 or 6,
**characterised in that**
the tracking of the movement of the object takes place using the reference point (12).

**8.** Method according to any one of claims 5 to 7,
**characterised in that**
the reference point depicts a corner position of the vehicle (3).

**9.** Method according to any one of the preceding claims,
**characterised in that**
the size of the bounding box (14) is adapted as a function of the orientation information and a geometric hypothesis for the vehicle (3).

**10.** Method according to any one of the preceding claims,
**characterised in that**
the processing device (6) provides object information obtained from the tracking for a vehicle system (7) evaluating movements of vehicles (3) in the transverse and longitudinal direction.

**11.** Method according to any one of the preceding claims,
**characterised in that**
a laser scanner and/or a time-of-flight camera and/or a radar sensor is used as the sensor(5).

**12.** Motor vehicle, comprising a sensor (5) installed therein to detect objects in the environment of the motor vehicle (1) and to provide sensor data which depict distance information comprising object points (8) and a processing device (6) for the sensor data which is designed to carry out a method according to claims 1 to 11.

**Revendications**

**1.** Procédé de fonctionnement d'un dispositif de traitement (6) pour des données de capteur d'au moins un capteur (5) monté dans un véhicule automobile (1), qui détecte des objets dans l'environnement du véhicule automobile (1) et dont les données de capteur décrivent des points d'objet (8) avec une information de distance, dans lequel le dispositif de traitement (6) détermine des objets à partir des données de capteur et poursuit le mouvement d'un objet classifié en tant que véhicule (3), dans lequel la poursuite de l'objet est effectuée au moyen d'un modèle dynamique qui utilise une information de déplacement décrivant le déplacement de l'objet dans deux sens de coordonnées,
**caractérisé en ce**
**que** le dispositif de traitement utilise, lors du remplissage d'un critère d'attribution appliqué sur l'information de déplacement et/ou sur une information de géométrie décrivant l'extension géométrique de l'objet dans le cadre du modèle dynamique, en outre une information d'orientation qui comprend un rectangle englobant (14) avec une orientation décrivant l'angle de lacet du véhicule (3).

2. Procédé selon la revendication 1
**caractérisé en ce**
**qu'**au rectangle englobant (14) est attribuée parmi plusieurs orientations possibles celle pour laquelle l'écart de son angle d'orientation (a) du sens de déplacement de l'objet est minimal.

3. Procédé selon la revendication 1 ou 2,
**caractérisé en ce**
**que** le critère d'attribution appliqué sur l'information de déplacement décrit une atteinte d'une valeur seuil par une mesure d'une incertitude d'angle du sens de déplacement de l'objet.

4. Procédé selon la revendication 3,
**caractérisé en ce**
**que** la mesure pour l'incertitude d'angle est déterminée en fonction de la variance d'au moins une vitesse dans un sens de coordonnées et/ou la covariance de vitesses dans les sens de coordonnées.

5. Procédé selon l'une quelconque des revendications précédentes,
**caractérisé en ce**
**que** le dispositif de traitement (6) réunit, pour la détermination de l'objet, plusieurs points d'objet (8) en un segment (11) délimité par un trajet ou plusieurs trajets (9, 10) et détermine un point de référence (12), en particulier en tant que point final du trajet ou en tant que point d'intersection de deux trajets (9, 10) du segment (11).

6. Procédé selon la revendication 5,
**caractérisé en ce**
**que** le critère d'attribution appliqué à l'information de géométrie décrit l'atteinte d'une valeur seuil pour un rapport de deux longueurs de trajet.

7. Procédé selon la revendication 5 ou 6,
**caractérisé en ce**
**que** la poursuite du déplacement de l'objet est effectuée à l'aide du point de référence (12).

8. Procédé selon l'une quelconque des revendications 5 à 7,
**caractérisé en ce**
**que** le point de référence décrit une position d'angle du véhicule (3).

9. Procédé selon l'une quelconque des revendications précédentes,
**caractérisé en ce**
**que** la grandeur du rectangle englobant (14) est adaptée en fonction de l'information d'orientation et d'une hypothèse de géométrie pour le véhicule (3).

10. Procédé selon l'une quelconque des revendications précédentes,
**caractérisé en ce**
**que** le dispositif de traitement (6) fournit des informations d'objet obtenues à partir de la poursuite pour un système de véhicule (7) évaluant des déplacements de véhicules (3) dans le sens transversal et longitudinal.

11. Procédé selon l'une quelconque des revendications précédentes,
**caractérisé en ce**
**qu'**un scanner laser et/ou une caméra temps de vol et/ou un capteur radar est utilisé en tant que capteur (5).

12. Véhicule automobile, comprenant un capteur (5) monté dans celui-ci pour la détection d'objets dans l'environnement du véhicule automobile (1) et pour la fourniture de données de capteur qui décrivent des points d'objet (8) présentant une information de distance, ainsi qu'un dispositif de traitement (6) pour les données de capteur qui est réalisé pour la réalisation d'un procédé selon les revendications 1 à 11.

FIG. 1

FIG. 2

13a

11

12

φ

13b

11

12

φ

13c

11

12

φ

13d

11

12

φ

y

x

FIG. 3

14

15

16

11

12

y

x

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Simultaneous Tracking and Shape Estimation with Laser Scanners. *Intelligent Vehicles Symposium Proceedings 2014 IEEE,* 2014, 1205-1210